# EUROPÄISCHE PATENTSCHRIFT

(11) **EP 0 282 961 B1**
(45) Veröffentlichungstag und Bekanntmachung des Hinweises auf die Patenterteilung: **10.11.1993**
(21) Anmeldenummer: 88104049.7
(22) Anmeldetag: 15.03.1988
(51) Int. Cl.: H02M 7/5383, H05B 6/06, H02M 7/538

(54) **Wechselrichter zur Speisung eines Verbrauchers mit einer induktiven Komponente**
Inverter for supplying a load with an inductive component
Onduleur pour alimenter une charge avec composante inductive

(30) Priorität: 20.03.1987 DE 3709250; 21.07.1987 DE 3724043
(43) Veröffentlichungstag der Anmeldung: 21.09.1988
(73) Patentinhaber: THOMSON ELECTROMENAGER S.A., 75020 Paris (FR)
(72) Erfinder: Rilly, Gerard, Dr.-Ing., D-7731 Unterkirnach (DE); Jeanneteau, Laurent, D-7730 Pfaffenweiler (DE)
(74) Vertreter: Einsel, Robert, Dipl.-Ing.

(56) Entgegenhaltungen:
- FR-A- 2 558 022
- FR-A- 2 578 697
- US-A- 3 889 090
- PATENT ABSTRACTS OF JAPAN vol. 6, no. 111 (E-114)(989) 22 Juni 1982, & JP-A-57 40379 (YASUKAWA DENKI SEISAKUSHO K. K.) 05 März 1982,

## Beschreibung

Die Erfindung betrifft einen selbstschwingenden Wechselrichter in Halbbrüchenschaltung, der aus einer Gleichspannung eine Wechselspannung für einen Verbraucher mit einer induktiven Komponente, insbesondere für die Spule bei einer induktiven Kochstelle, erzeugt. Die Frequenz der erzeugten Wechselspannung liegt in der Größenordnung von 10-100 kHz, insbesondere bei etwa 30 kHz.

Mit der erzeugten Wechselspannung können z.B. Wechselstrommotore ohne Kommutierung, Induktoren, Transformatoren, Leuchtstoffröhren mit einer Frequenz von etwa 30 kHz und Kochplatten mit induktiver Heizung betrieben werden, bei der durch ein Magnetfeld jeweils nur der Aufnahmebehälter für die Speise erwärmt wird.

Es ist ein Wechselrichter bekannt (DE-PS 34 00 671 bzw. FR-A-2558022), bei der eine Gleichspannung an eine sogenannte Halbbrücke mit zwei in Reihe geschalteten Leistungstransistoren gelegt ist. Die Transistoren werden abwechselnd leitend gesteuert und erzeugen an ihrem Verbindungspunkt die Wechselspannung für den Verbraucher. Zwischen den aufeinanderfolgenden leitenden Phasen der beiden Transistoren ist zur Sicherheit eine Ruhezeit vorgesehen, in der beide Transistoren nicht leitend sind. Um den notwendigen Stromfluß während dieser Ruhezeiten zu ermöglichen, sind den Transistoren entgegengesetzt zur ihren Kollektor/Emitter-Strecken gepolte Freilaufdioden parallel geschaltet, die während der Ruhezeit kurzzeitig den Strom übernehmen. Parallel zu den Dioden liegt jeweils ein Kondensator, der die Steilheit der erzeugten Wechselspannung begrenzt.

Bei einer solchen Schaltung ist es auch bekannt, den Verbindungspunkt der den Kollektor/Emitter-Strecken der Transistoren parallel geschalteten Dioden einerseits mit dem Verbraucher und andererseits über eine dritte Wicklung mit dem Verbindungspunkt der Transistoren zu verbinden. Die dritte Wicklung wird abwechselnd von den Strömen der beiden Transistoren durchflossen. Nach dem Prinzip eines Stromtransformators werden dadurch in zwei Sekundärwicklungen des Transformators Ströme erzeugt, die als Basis-Steuerströme auf die beiden Transistoren gelangen. Die Wicklungen sind dabei so gepolt, daß durch in ihnen induzierten Spannungen jeweils ein Transistor an der Basis durchlässig gesteuert und der andere gesperrt wird. Dabei wird also der durch die Transistoren fließende Strom zur Erzeugung der Basisströme der gewünschten Polarität und Amplitude für die Steuerung der beiden Transistoren ausgenutzt.

Wenn die an die Reihenschaltung der Transistoren angelegte Betriebsspannung aus einem Dreiphasennetz abgeleitet ist, z.B. einem sogenannten Drehstromnetz mit 380 V zwischen den Phasen, werden eine ausreichend hohe und gleichmäßige Betriebsspannung und eine gute Wirkung der gesamten Schaltung erzielt.

Bei Erzeugung der Betriebsspannung aus einem Einphasennetz mit 220 V kann es jedoch zur einer instabilen Wirkungsweise und insbesondere zur einer mangelhaften Basisansteuerung der beiden Transistoren kommen. Das ist dadurch bedingt, daß einerseits die Netzspannung dann gegenüber einem Dreiphasennetz geringer ist und andererseits die aus der Netzspannung gewonne pulsierende Gleichspannung von 100 Hz wegen nicht idealer Siebung periodisch fast bis auf null abfällt. Die Schaltung kann dann bei höheren Arbeitsfrequenzen als der Resonanzfrequenz, die durch die frequenzbestimmenden Glieder, insbesondere die Kondensatoren, die Induktivität einer Kochspule sowie die Induktivität des Transformators bestimmt ist, instabil werden. Das Arbeiten bei höheren Frequenzen als der Resonanzfrequenz ist aber erforderlich, um eine Leistungsdrosselung herbeiführen zu können. Bei dem bekannten Wechselrichter wird diese Leistungssteuerung nämlich durch eine Änderung der Arbeitsfrequenz erreicht.

Es ist zwar möglich, die aus dem Netz gewonnene pulsierende Gleichspannung durch große Siebglieder in eine annähernd gleichmäßige Gleichspannung mit ausreichend geringer Welligkeit umzuwandeln, deren Amplitude somit nicht mehr nennenswert abfällt. Der Aufwand für derartige Siebglieder ist jedoch insbesondere bei hohen verarbeiteten Leistungen unwirtschaftlich.

Der Erfindung liegt die Aufgabe zugrunde, bei einem Wechselrichter der beschriebenen Art die Ansteuerung der Basen der beiden Leistungstransistoren zu verbessern.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird also von einer Wicklung des Transformators zunächst eine Stellgröße abgeleitet. Diese Stellgröße steuert eine aktive Stromquelle. Diese Stromquelle führt einer Wicklung des Transformators einen Stromimpuls zu, der über die Stromtransformation des Transformators auf die Basen der Transistoren gelangt und für ein einwandfreies Durchschalten der Transistoren sorgt. Die Treiberschaltung für die Transistoren wird also durch eine zusätzliche Stromeinspeisung in den Transformator mittels einer aktiven Stromquelle unterstützt.

Durch die erfindungsgemäße Schaltung wird eine einwandfreie Ansteuerung der Basen der Leistungstransistoren erreicht, derart, das diese jeweils in gewünschter Weise während ihrer leitenden Phase schnell voll durchgeschaltet werden. Ein Vorteil der erfindungsgemäßen Schaltung besteht darin, daß sie unabhängig von der jeweiligen Amplitude der an die Reihenschaltung der Transistoren angelegten Betriebsspannung und auch unabhängig von der jeweiligen Arbeitsfrequenz des Wandlers arbeitet. Das ist dadurch zu erklären, daß die aktive Stromquelle von einer konstanten Betriebsspannung gespeist wird und somit die jeweils in den Transformator zur Unterstützung der Treiberschaltung eingespeisten Stromimpulse in ihrer Amplitude und ihrer zeitlichen Lage von der Betriebsspannung an den Leistungstransistoren und von der Arbeitsfrequenz nicht abhängig sind. Durch die erfindungsgemäße Schaltung wird eine stabile Arbeitsweise des Wandlers geschaffen, und zwar auch über einen großen Bereich der jeweils mit dem Wandler verarbeiteten Leistung etwa von 300 W bis 3 kW.

Gemäß einer Weiterbildung der Erfindung ist der Schaltung ein Startoszillator zugeordnet, der ein einwandfreies Anschwingen der Schaltung jeweils nach dem Einschalten gewährleistet. Der Startoszillator wird dabei im eingeschwungenen, stationären Zustand durch eine aus der Wechselspannung am Transformator gewonnenen Stellgröße jeweils abgeschaltet.

Die Erfindung wird im folgenden anhand der Zeichnung erläutert. Darin zeigen
- Fig. 1: die Schaltung eines bekannten Wechselrichters zusammen mit der erfindungemäßen Schaltung,
- Fig. 2: den Verlauf der an den Wechselrichter angelegten Betriebsgleichspannung,
- Fig. 3: den Stromverlauf für verschiedene Arbeitsfrequenzen und
- Fig. 4, 5: Kurven zur Erläuterung der erfindungsgemäßen Schaltung gemäß Fig. 1.

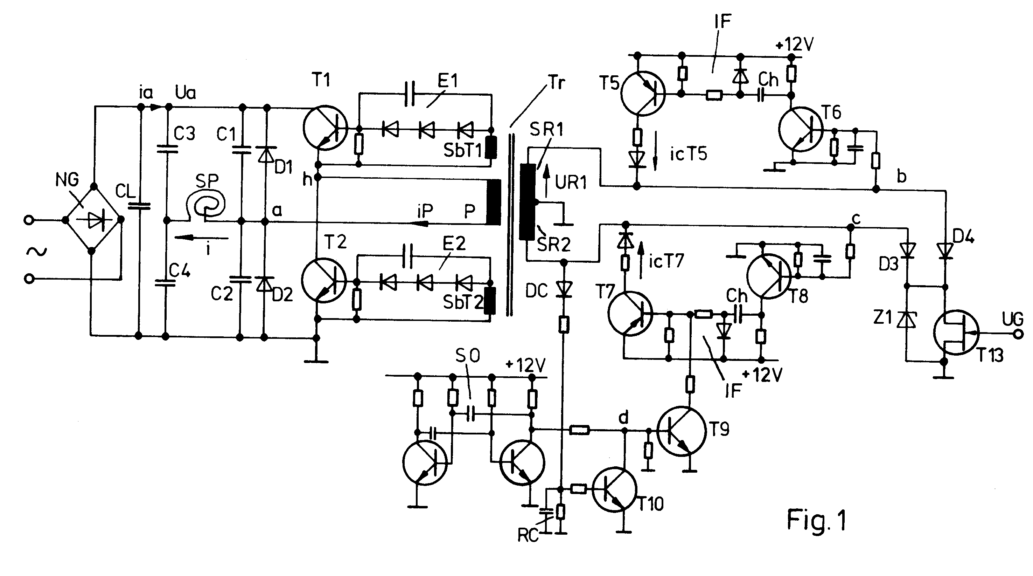

Fig. 1 zeigt einen Wechselrichter mit dem Netzgleichrichter NG, dem Ladekondensator CL, den Spannungsteilerkondensatoren C3, C4, der Spule SP für eine induktive Kochplatte, den zur Begrenzung der Spannungsspitzen und zur Stromübernahme dienenden Kondensatoren C1, C2, den zur Stromübernahme dienenden Freilaufdioden D1, D2, den Leistungstransistoren T1, T2, dem Transformator Tr mit der vom Strom der Transistoren T1, T2 durchflossenen Primärwicklung P, den zur Ansteuerung der Basis dienenden Wicklungen SbT1 und SbT2 sowie den beiden Sekundärwicklungen SR1 und SR2. An die Enden der Wicklungen SR1 und SR2 ist der als elektronischer Schalter dienende Feldeffekttransistor T13 über die Dioden D3, D4 angeschlossen, wobei parallel zur Schaltstrecke von T13 die Zenerdiode Z1 liegt. Die Gleichrichterschaltungen E1 und E2 erzeugen an dem Kondensator durch Gleichrichtung der Wechselspannung an den Wicklungen SbT1 und SbT2 jeweils Vorspannungen in Sinne einer Sperrung der Transistoren T1 und T2. Diese Vorspannungen dienen zur Verbesserung der Sperrung und des Ausräumens der Transistoren T1, T2. Die Schaltung wird durch die Spannung UG an dem Gate des Transistors T13 gesteuert. Diese Spannung kann mit einem Impulsformer aus der Ausgangswechselspannung des Wechselrichters am Punkt a gewonnen werden. Dann ist die Schaltung selbstschwingend ausgebildet. Die Spannung UG kann auch von einem getrennten Generator kommen. Der Strom, der abwechselnd durch die Transistoren T1, T2 fließt, fließt in jedem Fall als Strom iP durch die Primärwicklung P. Dadurch werden in den Wicklungen SbT1 und SbT2 Ströme induziert, die jeweils abwechselnd die Transistoren T1, T2 leitend steuern und sperren. Die soweit beschriebene Schaltung eines Wechselrichters ist bekannt und näher beschrieben in den DE-PS 34 00 671 und 35 08 289 (FR-A-2578697).

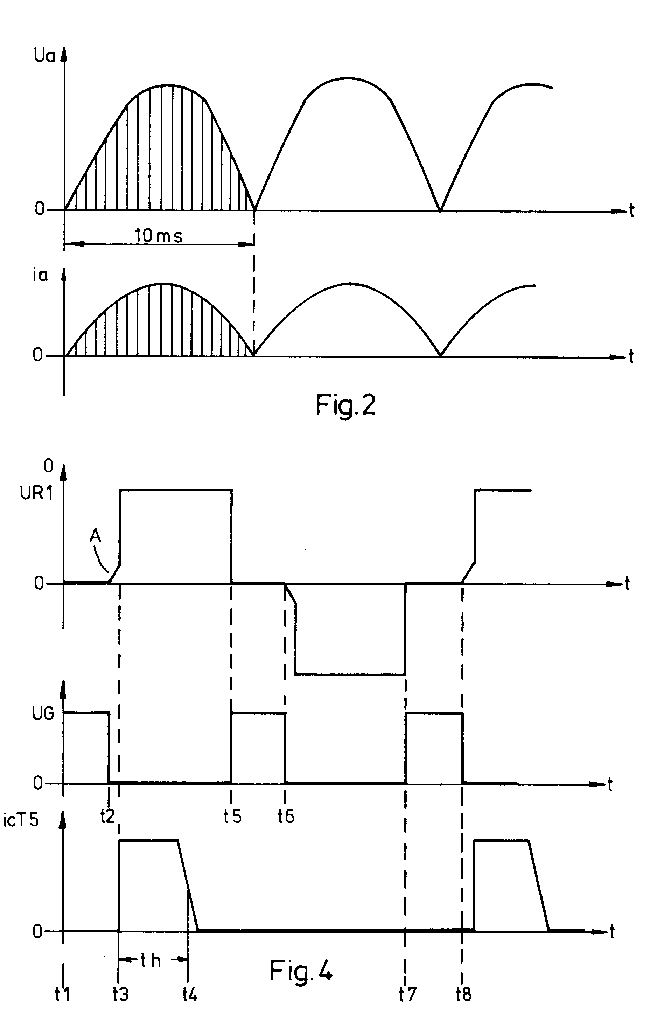

Fig. 2 zeigt den Verlauf der Spannung Ua, die die Gleichspannung für die Reihenschaltung T1, T2 darstellt, sowie den Strom ia gemäß Fig. 1. Es ist ersichtlich, daß die Spannung Ua mit einer Frequenz von 100 Hz keine reine Gleichspannung, sondern eine pulsierende Gleichspannung ist, die periodisch bis auf null abfällt. Durch diesen Amplitudenabfall wird, wie bereits erläutert, die stabile Wirkungsweise des Wechselrichters beeinträchtigt. Die Schraffur in Fig. 2 deutet an, daß jeweils während der Periodendauer von 10 ms in der Spannung Ua eine Vielzahl von Umschaltungen zwischen den Transistoren T1 und T2 erfolgt, da die Arbeitsfrequenz des Wechselrichters mit etwa 30 kHz wesentlich höher ist als die Netzfrequenz.

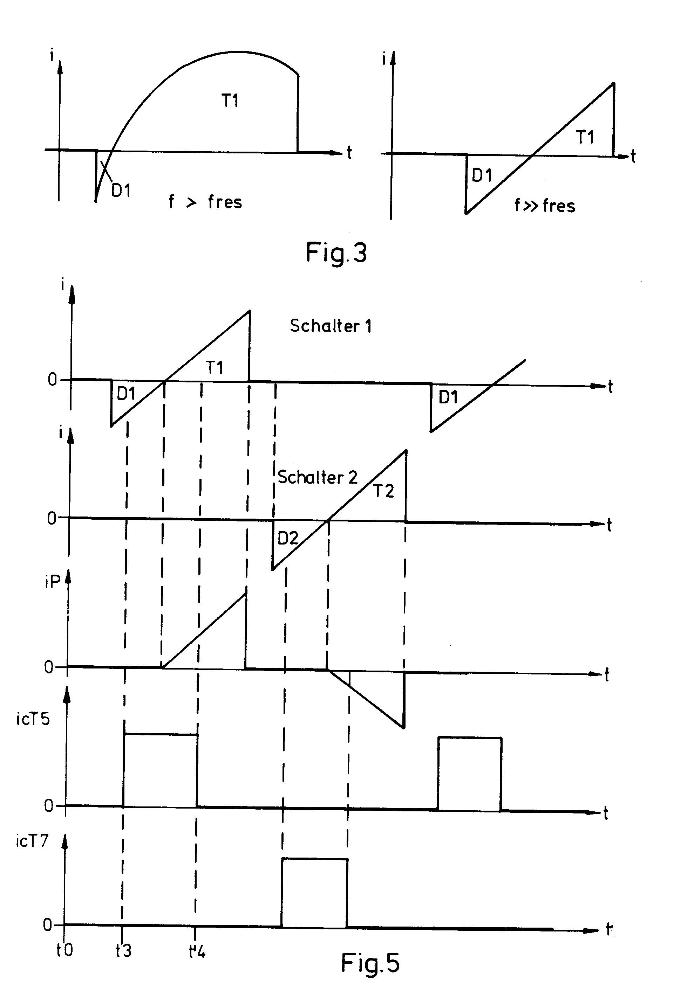

Fig. 3 zeigt den Stromverlauf jeweils über D1 und T1. Im linken Teil der Fig. 3 ist dieser Stromverlauf für eine Frequenz f dargestellt, die geringfügig oberhalb der Resonanzfrequenz fres der Schaltung gemäß Fig. 1 liegt. Diese Stromverteilung ist eine weitere Ursache für die instabile Wirkungsweise des Wechselrichters. Fig. 3 zeigt den Stromverlauf, wie er sich nach Abschalten eines der beiden Zweige in dem anderen Zweig darstellt. Die Diode D1 wird zunächst leitend und übernimmt einen Strom, der auf null abfällt, seine Richtung ändert und dann von der Wicklung P und T1 übernommen wird, bis auch T1 abgeschaltet wird und sich anschließend der dargestellte Vorgang im anderen Zweig für T2 wiederholt. Da der Stromanstieg in T1 auch in der Wicklung P und somit über die Mitkopplung des Transformators Tr eine Ansteuerung der Basis des betreffenden Transistors bewirkt, führt ein geringer Anstieg des Stromes in T1 und in der Wicklung P auch nur zur einer geringen Ansteuerung der Basis des Transistors T1 oder T2, die unter bestimmten Voraussetzungen für das gewünschte schnelle Durchschalten des betreffenden Transistors nicht mehr ausreicht. Dadurch kann die Schwingungserzeugung abbrechen. Außerdem bedingt ein nicht einwandfreies Durchschalten des Transistors eine erhöhte Verlustleistung an dem Transistor sowie die Gefahr einer Zerstörung.

Zur Beseitigung der mangelhaften Basisansteuerung von T1 und T2 ist jetzt in Fig. 1 an die Wicklung SR1 eine zusätzliche Schaltung mit den Transistoren T5 und T6 angeschlossen und entsprechend an die Wicklung SR2 eine gleiche Schaltung mit den Transistoren T7 und T8.

Anhand der Fig. 4 wird die Wirkungsweise dieser Schaltung erläutert, und zwar für die obere Schaltung T5, T6. UR1 ist die Spannung an der Rückkopplungswicklung SR1. UG ist die Steuerspannung am Gate des Transistors T13. Im Zeitpunkt t1 ist der Transistor T13 durch die Spannung UG voll leitend, die Wicklung SR1 kurzgeschlossen, und alle Spannungen, und Ströme an dem Transformator TR sind praktisch null. Die Rückkopplung von der Wicklung P auf die übrigen Wicklungen ist während dieser Zeit unterbrochen. Nach der Sperrung des Transistors T13 im Zeitpunkt t2 ist der Rückkopplungsweg wieder freigegeben. Es kommt jedoch zunächst nur zur einem langsamen Anstieg des Basisstromes des Transistors T1, wie der erste Teil A der ansteigenden Flanke der Spannung UR1 zeigt. Dieser Anstieg ist zunächst unerwünscht langsam. Die ansteigende Flanke A in der Spannung UR1 reicht jedoch aus, den Transistor T6 leitend zu steuern, so daß an dessen Kollektor ein negativ gerichteter Impuls auftritt. Dieser Impuls gelangt über den Impulsformer IF mit dem Kondensator Ch auf die Basis des Transistors T5, so daß dieser leitend gesteuert wird. Der Transistor T5 erzeugt daraufhin einen Stromimpuls icT5 mit der Dauer th von t3 - t4. Dieser Strom fließt durch die Wicklung SR1, so daß die ansteigende Flanke der Spannung UR1 nach dem flachen Verlauf A nun dieselbe hohe Steigung annimmt wie die ansteigende Flanke des Stromes icT5. Auf diese Weise wird aus dem zunächst schwachen induzierten

Impuls ein starker Impuls, der von der Sekundärwicklung SR1 auf die Wicklung SbT1 übertragen wird und die Basis des Transistors T1 so ansteuert, daß dieser Transistor in erwünschter Weise leitend gesteuert wird. Die Dauer des Stromimpulses icT5 ist länger als die aus Fig. 3 ersichtliche Zeitdauer, während der die Diode D1 leitend ist, da diese Zeit durch den Impuls icT5 überbrückt werden muß. Die Basisansteuerung des Transistors T1 wird also durch den von T5 künstlich eingespeisten Stromimpuls icT5 in dem Sinne unterstützt, daß der Transistor T1 auch bei geringen Werten der Spannung Ua und bei allen Arbeitsfrequenzen des dargestellten Wechselrichters einwandfrei leitend gesteuert wird. Die Schaltung mit T7 und T8 an der Wicklung SR2 arbeitet in der gleichen Weise im Gegentakt. Die Periodendauer der Arbeitsweise des Wechselrichters von t1 - t7 liegt je nach Arbeitsfrequenz zwischen 30 µs und 50 µs. Der Transistor T13 ist jeweils von t1 - t2, t5 - t6 und t7 - t8 leitend und schließt die Wicklungen SR1 und SR2 und damit den gesamten Transformator Tr kurz. Die Dauer th der Stromimpulse durch die Transistoren T5 und T7 beträgt etwa 15 µs. Jeweils nach dem Stromimpuls, also von t4 an, erzeugt der über die Wicklung P fließende Strom iP des Transistors T1 über die Rückkopplung zur Wicklung SbT1 den zum Durchschalten notwendigen Basisstrom für den Transistor T1. Anschließend wird im Zeitpunkt t5 der Transistor T13 erneuet leitend und die Rückkopplung unterbrochen, bis im Zeitpunkt t6 der Vorgang erneut beginnt. Die dann noch im Transformator Tr vorhandene Energie führt dazu, daß trotz der Sperrung der Primärwicklung P noch ein geringer Strom in den betreffenden Sekundärwicklung SbT1 bzw. SbT2 fließen kann, der in den Wicklungen SR1 und SR2 eine zum Detektieren durch die Transistoren T6 und T8 benötigte Spannung erzeugt.

Fig. 5 zeigt den Zusammenhang zwischen den Strömen in dem Schalter 1, gebildet durch D1 und T1, sowie in dem Schalter 2, gebildet durch D2 und T2. Innerhalb der Stromverläufe ist in Fig. 5 dargestellt, durch welche Bauteile jeweils der in die Spule SP hineinfließende Strom i fließt. Zwischen T1 und D2 und T2 und D1 fließt der Strom kurzzeitig über die Kondensatoren C1 und C2, so daß in der Spule SP ein kontinuierlicher Strom i fließt. Der Nulldurchgang dieses Stromes i liegt jeweils beim Übergang des Stromes von D1 auf T1 und von D2 auf T2. Der Strom iP ist der Strom durch die Primärwicklung P, der entweder dem Strom durch T1 oder dem Strom durch T2 entspricht. Im unteren Teil der Fig. 5 sind wieder die Stromimpulse icT5 entsprechend Fig. 4 und zusätzlich die Stromimpulse icT7 des Transistors T7 dargestellt.

Nach dem Einschalten der gesamten Schaltung kann es vorkommen, daß die Schaltung nicht von selbst einwandfrei anschwingt. Deshalb ist gemäß Fig. 1 zusätzlich der Oszillator SO vorgesehen, der auf einer Frequenz von 50 kHz schwingt. Die Ausgangsspannung des Oszillators SO gelangt über den Transistor T9 an die Basis von T7 und von dort an die Wicklung SR2. Die Frequenz des Oszillators SO ist höher als die Resonanzfrequenz und veranlaßt eine Impulsübertragung von der Wicklung SR2 auf die Wicklung SbT2 und damit den Transistor T2. Dadurch werden die Dioden der Gleichrichterschaltungen E1 und E2 an den Basen von T1 und T1 aufgeladen. An den Wicklungen SbT1 und SbT2 entsteht eine Spannung, die zunächst der Hüllkurve der Impulsspannung am Transformator entspricht. Ab einer bestimmten Amplitude dieser Spannung wird dann ein Zustand erreicht, in dem einer der Transistoren T1 oder T2 leitend wird und die gesamte Schaltung anschwingt. Mit der Diode DC wird an dem Siebglied RC daraus eine positive Spannung gewonnen, die den Transistor T10 leitend steuert und damit den Punkt d erdet und den Transistor T9 sperrt. Dadurch wird die Zuführung der Spannung des Oszillators SO zu der Schaltung unterbrochen. Die Schaltung befindet sich dann im stationären Zustand, in dem der Oszillator SO nicht mehr benötigt wird. Die Schaltung ist dadurch selbstschwingend ausgebildet, daß der Ausgang a der Schaltung über einen Impulsformer an das Gate des Transistors T13 angeschlossen ist und die zur Schwingungserzeugung dienende Rückkopplungsspannung UG für den Transistor T13 liefert.

In Fig. 1 erfolgen die Steuerung der Transistoren T6, T8 einerseits und die Stromeinspeisung über die Transistoren T5, T7 in den Transformator Tr andererseits mittels derselben Wicklung SR1 bzw. SR2. Für diese beiden Funktionen können aber auch getrennte Wicklungen vorgesehen sein. Jede der Wicklungen SR1 und SR2 würde dann aus zwei voneinander getrennten Wicklungen bestehen, von denen die eine die Steuerung der Transistoren T6, T8 bewirkt und die andere von den Transistoren T5, T7 mit den Strömen icT5 und icT7 gespeist wird. Die in Fig. 1 an die Wicklungen SR1 und SR2 angeschlossene Schaltung mit Ausnahme der Transistoren T5, T7, also die Schaltung mit den Bauteilen SO, T6, T8, T9, T10, T13 und den zugeordneten passiven Bauelementen ist vorzugsweise als integrierte Schaltung ausgebildet. Vorzugsweise ist diese Schaltung gemeinsam mit der übrigen Steuerschaltung für die Transistoren T1, T2 als integrierte Schaltung ausgebildet. Diese Steuerschaltung ist die in Fig. 1 nicht dargestellte Schaltung zwischen dem Ausgang a des Wechselrichters und der Steuerelektrode von T13, durch die der Wechselrichter selbstschwingend ausgebildet ist. Eine solche Steuerschaltung mit zusätzlichen Maßnahmen zum Schutz des Wechselrichters gegen Überlastung ist näher beschrieben in der DE-PS 34 00 671 und 35 08 289.

## Patentansprüche

1. Selbstschwingender Wechselrichter in Halbbrückenschaltung zur Speisung eines Verbrauchers (SP) mit einer induktiven Komponente, bei dem zwischen den Gleichspannungsklemmen die Reihenschaltung von zwei Transistoren (T1, T2) liegt, die von einer jeweils mit der Basis des Transistors (T1, T2) verbundenen ersten und zweiten Wicklung (SbT1, SbT2) eines Transformators (Tr) mit einer Arbeitsfrequenz im Gegentakt abwechselnd leitend gesteuert werden, wobei parallel zu den Transistoren (T1, T2) zwei Freilaufdioden (D1, D2) liegen, deren die Ausgangsspannung liefernder Verbindungspunkt (a) über eine dritte Wicklung (P) mit dem Verbindungspunkt (h) der Transistoren (T1, T2) verbunden ist, **dadurch gekennzeichnet**, daß eine mit der ersten und zweiten Wicklung (SbT1 und SbT2) fest gekoppelte Wicklung (SR1, SR2) des Transformators (Tr) an eine Steuerklemme (b, c) einer aktiven Stromquelle (T5, T7) angeschlossen ist, die jeweils während eines Periode der Arbeitsfrequenz zu Beginn der leitenden Phase des Transistors (T1, T2) einer Wicklung (SR1, SR2) des Transformators (Tr) einen Stromimpuls (icT5, icT7) zuführt.

2. Wechselrichter nach Anspruch 1, dadurch gekennzeichnet, daß für die Steuerung der Stromquelle (T5, T7) und für die Einspeisung des Stromimpulses (icT5, icT7) dieselbe Wicklung (SR1, SR2) dient.

3. Wechselrichter nach Anspruch 1, dadurch gekennzeichnet, daß die Dauer (th) des Stromimpulses (icT5, icT7) größer ist als die Zeit, in der die dem Transistor (T1, T2) zugeordnete Diode (D1, D2) leitend ist.

4. Wechselrichter nach Anspruch 3, dadurch gekennzeichnet, daß der Stromimpuls (icT5, icT7) während der leitenden Phase der dem Transistor (T1, T2) parall liegenden Diode (D1, D2) beginnt und nach dem Beginn der leitenden Phase des Transistors (T1, T2) endet.

5. Wechselrichter nach Anspruch 2, dadurch gekennzeichnet, daß das Ende der Wicklung (SR1, SR2) an die Basis eines Transistors (T6, T8) angeschlossen und dessen Kollektor über eine Impulsformerschaltung (IF) mit der Basis eines weiteren Transistors (T5, T7) verbunden ist, dessen Kollektor/Emitter-Strecke in Reihe mit einer Betriebsgleichspannung (+ 12 V) und der Wicklung (SR1, SR2) liegt.

6. Wechselrichter nach Anspruch 1, dadurch gekennzeichnet, daß an die beiden Enden einer in der Mitte geerdeten Gegentaktwicklung (SR1, SR2) zwei gleiche, je eine steuerbare Stromquelle bildende Schaltungen (T5/T6 bzw. T7/T8) angeschlossen sind.

7. Wechselrichter nach Anspruch 6, dadurch gekennzeichnet, daß die Enden der Gegentaktwicklung (SR1, SR2) über ein elektronisches Schalterelement (T13) verbunden sind, an dessen Steuerelektrode die Ausgangsspannung über einen Impulsformer oder eine Steuerspannung (UG) mit der Arbeitsfrequenz angelegt ist.

8. Wechselrichter nach Anspruch 1, dadurch gekennzeichnet, daß an eine Wicklung (SR2) des Transformators (Tr) der Ausgang eines zum Anschwingen nach dem Einschalten dienenden freischwingenden Oszillators (SO) angekoppelt ist.

9. Wechselrichter nach Anspruch 8, dadurch gekennzeichnet, daß aus der an einer Wicklung (SR2) des Transformators (Tr) stehenden Wechselspannung mit einem Gleichrichter (DC) eine Gleichspannung gewonnen ist, die im stationären Betrieb die Ankopplung des Oszillators (SO) unterbricht (T10) oder den Oszillator (SO) ausschaltet.

10. Wechselrichter nach Anspruch 5, 7, 8 und 9, dadurch gekennzeichnet, daß der von der Wicklung (SR1, SR2) gesteuerte Transistor (T6, T8), das elektronische Schalterelement (T13), der Oszillator (SO) und der Gleichrichter (DC) als integrierte Schaltung ausgebildet sind.

## Claims

1. Self oscillating inverter using a half wave bridge for the feeding of an energy consuming device (SP) having an inductive component in which, between the direct voltage terminals, there is connected the series circuit of two transistors (T1, T2) which are controlled at a working frequency to be alternately conductive in push pull by a respective first and second winding (SbT1, SbT2) of a transformer (Tr) connected to the base of the transistor (T1, T2), wherein two free running diodes (D1, D2), are connected in parallel with the transistors (T1, T2), and their point of interconnection (a), at which the output voltage is delivered, is connected to the point of interconnection of the transistors (T1, T2) via a third winding (P), characterised in that, a winding (SR1, SR2) of the transformer (Tr) that is permanently coupled to the first and second winding (SbT1 and SbT2) is connected to a control terminal (b, c) of an active current source (T5, T7) which supplies a current pulse (icT5, icT7) to a winding (SR1, SR2) of the transformer (Tr) during a period of the working frequency at each commencement of the conductive phase of the transistor (T1, T2).

2. Inverter in accordance with claim 1, characterised in that, the same winding (SR1, SR2) serves for the control of the current source (T5, T7) and for the feeding of the current pulse (icT5, icT7).

3. Inverter in accordance with claim 1, characterised in that, the duration (th) of the current pulse (icT5, icT7) is greater than the time in which the diode (D1, D2) associated with the transistor (T1, T2) is conductive.

4. Inverter in accordance with claim 3, characterised in that, the current pulse (icT5, icT7) begins during the conductive phase of the diode (D1, D2) connected in parallel with the transistor (T1, T2) and ends after the commencement of the conductive phase of the transistor (T1, T2).

5. Inverter in accordance with claim 2, characterised in that, the end of the winding (SR1, SR2) is connected to the base of a transistor (T6, T8) and its collector is connected via a pulse shaping circuit (IF) to the base of a further transistor (T5, T7) whose collector/emitter path is in series with a direct operating voltage (+ 12 V) and the winding (SR1, SR2).

6. Inverter in accordance with claim 1, characterised in that, two similar circuits (T5/T6 or T7/T8), each forming a controllable current source, are connected to the two ends of a push-pull winding (SR1, SR2) which is earthed at the centre.

7. Inverter in accordance with claim 6, characterised in that, the ends of the push-pull winding (SR1, SR2) are connected via an electronic switching clement (T13) to whose control electrode there is applied the output voltage via a pulse shaper or a control voltage (UG) having the working frequency.

8. Inverter in accordance with claim 1, characterised in that, the output of a free running oscillator (SO) serving to start the oscillation after switching on is coupled to a winding (SR2) of the transformer (Tr).

9. Inverter in accordance with claim 8, characterised in that, a direct voltage is obtained by a rectifier (DC) from the alternating voltage present on a winding (SR2) of the transformer (Tr) which interrupts the coupling of the oscillator (SO) or switches off the oscillator (SO) in the steady state.

10. Inverter in accordance with claim 5, 7, 8 and 9, characterised in that, the transistor (T6, T8) controlled by the winding (SR1, SR2), the electronic switching element (T13), the oscillator (SO) and the rectifier (DC) are constructed as an integrated circuit.

## Revendications

1. Onduleur auto-hétérodyne dans un circuit demi-pont pour alimenter un dissipateur (SP) avec une composante inductive dans lequel se trouve le montage en série de deux transistors (T1, T2) entre les bornes de tension continue, transistors qui sont commandés conducteurs en alternance en push-pull avec une fréquence de travail par un premier et un second enroulement (SbT1, SbT2) d'un transformateur (Tr) qui sont respectivement reliés à la base du transistor (T1, T2), deux diodes de roue libre (D1, D2) se trouvant parallèlement aux transistors (T1, T2), diodes dont le point de connexion (a) qui donne la tension de départ est relié par un troisième enroulement (P) au point de connexion (h) des transistors (T1, T2), **caractérisé en ce** qu'un enroulement (SR1, SR2) du transformateur (Tr) coupé de manière fixe au premier et au second enroulement (SbT1, SbT2) est raccordé à une borne de commande (b, c) d'une source de courant active (T5, T7) qui amène une impulsion de courant (icT5, icT7) à un enroulement (SR1, SR2) du transformateur (Tr) respectivement pendant une période de la fréquence effective au début de la phase conductrice du transistor (T1, T2).

2. Onduleur selon la revendication 1, **caractérisé en ce** que le même enroulement (SR1, SR2) sert à la commande de la source de courant (T5, T7) et à l'alimentation de l'impulsion de courant (icT5, icT7).

3. Onduleur selon la revendication 1, **caractérisé en ce** que la durée (th) de l'impulsion de courant (icT5, icT7) est supérieure à la durée pendant laquelle la diode (D1, D2) qui est affectée au transistor (T1, T2) est conductrice.

4. Onduleur selon la revendication 3, **caractérisé en ce** que l'impulsion de courant (icT5, icT7) commence pendant la phase conductrice de la diode (D1, D2) qui se trouve parallèle au transistor (T1, T2) et se termine après le début de la phase conductrice du transistor (T1, T2).

5. Onduleur selon la revendication 2, **caractérisé en ce** que l'extrémité de l'enroulement (SR1, SR2) est raccordée à la base d'un transistor (T6, T8) dont le collecteur est relié, par un circuit de formateur d'impulsions (IF), à la base d'un autre transistor (T5, T7) dont le parcours collecteur/émetteur est en série avec une tension continue de fonctionnement (+ 12 V) et l'enroulement (SR1, SR2).

6. Onduleur selon la revendication 1, **caractérisé en ce** que deux circuits pareils (T5/T6 ou T7/T8) qui forment chacun une source de courant qui peut être commandée sont raccordés aux deux extrémités d'un enroulement push-pull (SR1, SR2) mis à la terre au milieu.

7. Onduleur selon la revendication 6, **caractérisé en ce** que les extrémités de l'enroulement push-pull (SR1, SR2) sont reliées par un élément de commutation électronique (T13) à l'électrode de commande duquel se trouve la tension de départ par l'intermédiaire d'un formateur d'impulsions ou une tension de commande (UG) avec la fréquence effective.

8. Onduleur selon la revendication 1, **caractérisé en ce** que la sortie d'un oscillateur libre (SO), qui sert à l'oscillation après la mise en marche, est couplé à un enroulement (SR2) du transformateur (Tr).

9. Onduleur selon la revendication 8, **caractérisé en ce** qu'une tension continue est obtenue avec un redresseur (DC) à partir de la tension alternative qui se trouve sur un enroulement (SR2) du transformateur (Tr), tension continue qui, à l'état stationnaire, interrompt (T10) le couplage de l'oscillateur ((SO) ou qui met hors circuit l'oscillateur (SO).

10. Onduleur selon les revendications 5, 7, 8 et 9, **caractérisé en ce** que le transistor (T6, T8) commandé par l'enroulement (SR1, SR2), l'élément de commutation électronique (T13), l'oscillateur (SO) et le redresseur (DC) sont configurés comme un circuit intégré.
